## Europäisches Patentamt

## European Patent Office

## Office européen des brevets

(11) Publication number: **0 178 147**
**B1**

(12) **EUROPEAN PATENT SPECIFICATION**

(45) Date of publication of patent specification: **14.03.90**

(21) Application number: **85307175.1**

(22) Date of filing: **08.10.85**

(51) Int. Cl.⁵: **A 47 J 27/21**, **A 47 J 31/56**, **F 24 H 9/20**

(54) **Wall mounted kettle.**

(30) Priority: **09.10.84 GB 8425464**

(43) Date of publication of application:
**16.04.86 Bulletin 86/16**

(45) Publication of the grant of the patent:
**14.03.90 Bulletin 90/11**

(84) Designated Contracting States:
**AT BE CH DE FR GB IT LI LU NL SE**

(56) References cited:
**DE-A-2 146 366**
**DE-A-3 205 719**
**DE-B-1 215 319**
**GB-A- 563 238**
**GB-A-1 597 834**
**GB-A-2 098 708**
**US-A-2 640 968**
**US-A-3 366 776**
**US-A-3 509 319**

(73) Proprietor: **Jenkinson, Robin Arthur**
**18, King Coel Road**
**Lexden Colchester Essex CO3 5AG (GB)**

(72) Inventor: **Jenkinson, Robin Arthur**
**18, King Coel Road**
**Lexden Colchester Essex CO3 5AG (GB)**

(74) Representative: **Oliver, Roy Edward et al**
**POLLAK MERCER & TENCH High Holborn House**
**52-54 High Holborn**
**London WC1V 6RY (GB)**

Courier Press, Leamington Spa, England.

## Description

The present invention relates to kettle apparatus for mounting in a wall.

Electric kettles are well-known domestic items, which comprise a kettle body provided with a spout and enclosing a kettle element provided, to the exterior of the kettle body, with an electrical socket connector so that the kettle may be provided with electric current for heating the element, the connector being readily disconnected from the electricity supply. Electric kettles are often provided with an automatic device for cutting off the electric current when boiling has occurred.

Known electric kettles operate satisfactorily, but they suffer from the following disadvantages. First, of necessity, they take up space on kitchen working surfaces. Further, it is common that such kettles are not disconnected from the electricity supply before being filled with water. This has obvious dangers.

GB patent -A-563238 describes a cordless kettle which is energised, i.e. brought to boiling, when inserted in a stand. US-A-3366776 describes a similar apparatus, having a holder for an electrically heated kettle and means on the holder for supplying electrical energy to the heating means included in the kettle. The apparatus includes cooperative means which ensure that the supply of electrical energy cannot be switched on when the holder and the vessel are incorrectly inter-engaged.

According to the present invention, apparatus is provided comprising an electric kettle and a holder in which the kettle is mounted for heating of its contents and from which the kettle is removable, wherein the kettle comprises a body having a heating element electrical connector and the holder is also formed with an electrical connector, such that the connectors are inter-engageable in order to introduce electric current to the kettle, and wherein electric current can only be introduced when the kettle is correctly engaged in the holder, characterised in that the holder comprises a box-like cabinet intended for recessed mounting within a wall or a kitchen unit, the cabinet providing an open-fronted cavity in which the whole kettle body is to be slidingly received, and in that the cabinet and kettle include means for guidingly supporting the base of the kettle during sliding insertion of the kettle into the cavity, including means for directing the base of the kettle upwardly so as to inter-engage the connectors of the kettle and the cabinet, whereby upon full insertion of the kettle into the cavity the cabinet and the kettle are correctly inter-engaged.

The means for guidingly supporting the base of the kettle preferably include a plurality of rollers in the bottom of the cabinet and the means for directing the base of the kettle upwardly include a plate on the base of the kettle and a raised surface at the inward end of the rollers, such that upon insertion of the kettle into the cavity, the kettle rides upwardly upon sliding impingement of the plate upon the raised surface. Other preferred features are defined in the other dependent claims.

In a preferred embodiment of the invention, the kettle comprises a body supporting an electric heating element, the element being associated with a plug and socket electrical connector having first and second inter-engagable portions, characterised in that the first portion of the electrical connector is formed as part of the cabinet, being arranged in use to extend within the body of the cabinet, and in that the second portion of the connector extends from the kettle body, whereby electric current can only be supplied to the heating element when the kettle is correctly positioned within the cabinet.

The cabinet may be arranged for mounting in a wall or in a kitchen unit. It is preferably provided with a grill to its upper exterior surface, which allows excess steam generated by the kettle to escape to the exterior. However, as an alternative or additional feature, a steam extraction pipe may be provided to pass through a wall or kitchen unit within which the cabinet is installed to the exterior. Optionally, an extractor fan can be attached to this steam extraction pipe to ensure that all steam generated is passed to the exterior. To achieve this a time-delay switch may be used to ensure that the fan continues to extract steam well after "boiling" has been achieved, and the kettle switched off.

It will be appreciated that the kettle and the kettle cabinet assembly are such that the kettle may be readily slipped into the kettle cabinet such that it is firmly held but may be readily withdrawn after suitable unlatching. The kettle may be filled in the ordinary way by, for example, positioning the spout of the kettle underneath a domestic water tap.

As an additional feature the body of the kettle may be formed of a clear or transluscent plastics material or have a clear transparent vertically disposed strip adjacent the handle so that the level of water within the kettle can be readily ascertained.

Alternatively, the cabinet may be provided with a separate water supply and the kettle may be filled via a water supply pipe which extends toward the body of the kettle, adjacent the spout for example, only when the kettle is fully inter-engaged within the cabinet. In this case the water supply may be controlled by suitable switching means such that the kettle can be filled in situ to a predetermined level either by visually inspecting the kettle body adjacent the handle, or by use of a sequentially arranged set of level sensors in the cabinet.

In this latter case the water supply to the kettle when in situ can be achieved by an automatic (e.g. solenoid) valve. The valve is caused to provide a selected amount of water to the kettle when a selector switch is activated. The selector switch is associated with an electronic control means which in turn is associated with a level sensor or sensors disposed within, or adjacent, the body of the kettle. These level sensors may provide a signal indicative of the amount of water in the kettle and that value may be substracted from a second selected value in order to give the automatic valve a value for liquid to be supplied.

Alternatively the level sensors may produce an output signal when the water level reaches a predetermined point, said signal causing the opened solenoid valve to close.

The connector is preferably positioned toward the base of the kettle and may be provided with a bore let into the body of the kettle, which bore serves to provide a guide for guiding the kettle into the cabinet and positioning the same correctly.

Alternatively, one of the first and second portions of the electrical connector may be positioned on the exterior of the body, in which case a drip protector is positioned over the connector portion attached to the cabinet so that water cannot directly contact the connector even if the kettle were to overflow. In both these cases because the connector is above the base, and is protected, there is no possibility of water seeping into the electrical connectors. Further in this arrangement it is impossible for the operators' fingers to come into contact with live terminals.

A drip tray may be provided below the kettle so that any water and/or condensation may be collected beneath the kettle. Because the kettle is regularly warmed to fairly high temperatures the water in the drip tray will tend to evaporate, given a suitable grill to the exterior, and hence the problems of small amounts of condensate can be readily dealt with by vaporisation.

In order to ensure that no water is dispensed when the kettle is outside the cabinet a plate may be provided which pivots or slides when the kettle is pressed home into the cabinet and hence allows the electrical connector to be energised. This can operate both as an enabling switch to allow the controls to become effective, and also to provide means whereby any water overflowing from the spout of the kettle can be caused to flow round the electrical connector and into the drip tray without coming into any contact with the electrical parts of the apparatus.

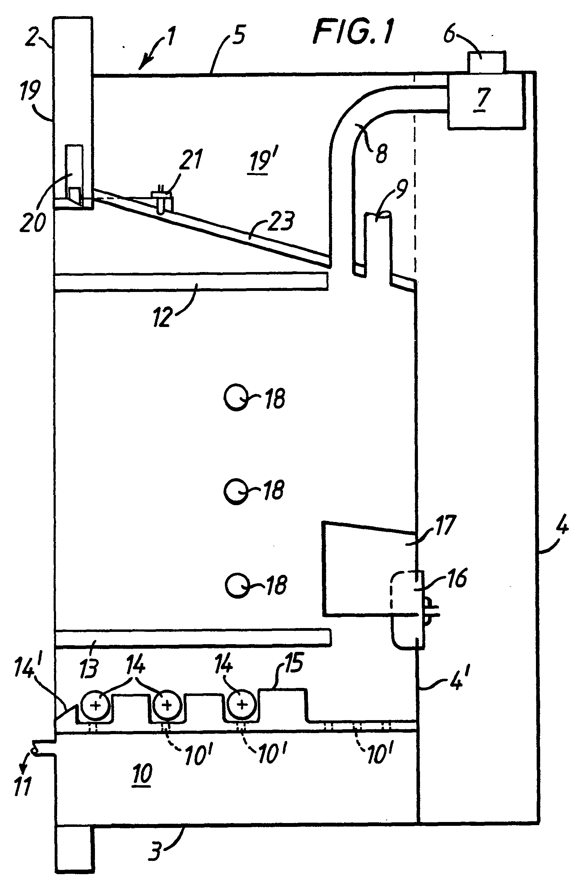

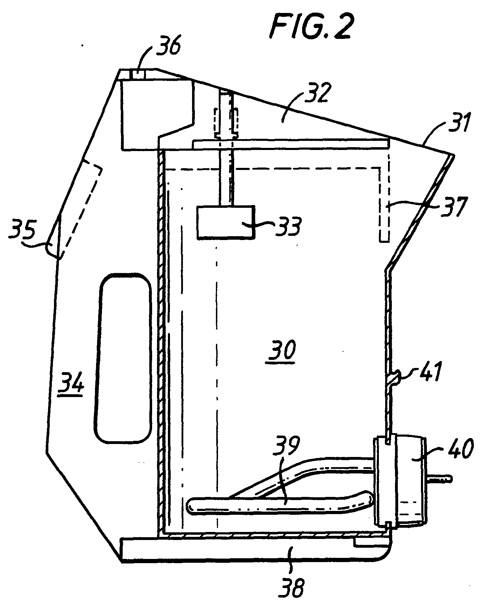

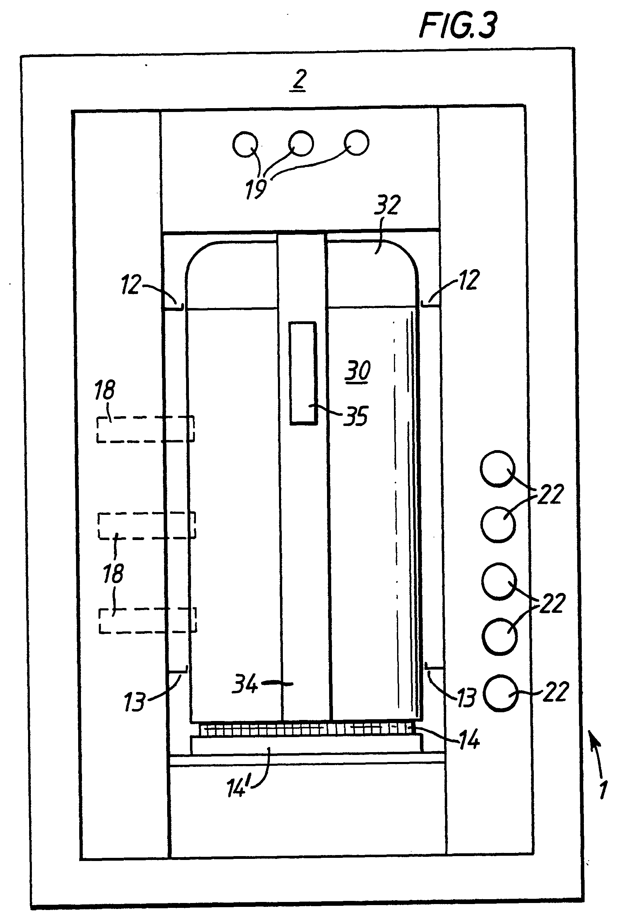

One aspect of the present invention will now be described, by way of illustration only, with reference to the accompanying drawings wherein Figure 1 shows a vertical cross-section through a cabinet in accordance with the present invention, Figure 2 shows a vertical cross-section through a kettle jug for positioning in the cabinet of Figure 1, and Figure 3 shows the front elevation of the assembly in situ in a wall.

With reference to Figure 1 a cabinet (1) is provided with an exterior vertical face (2). This face (2) is provided with a visually attractive surface since it is all that can be seen by the consumer when the cabinet is set into a wall. The cabinet (1) is also formed of a base (3), and a top (5) extending generally perpendicular to the exterior face (2), and a rear (4) so as to define a generally rectangular cross-section in both main planes. The base (3) supports a drip tray (10) which is adapted to be slid forwardly for removal if necessary. The drip tray (10) is provided with one, or a plurality, of overflows (II) which mainly allow the evaporated condensate to pass to the exterior. A support (14') is located immediately above the withdrawable drip tray (10) and forms a plurality of longitudinally extending channels, each adapted to accommodate a roller (14); the rolling surface of each of the rollers (14) is proud of the respective channels in the support (14'). At suitable positions in the support (14') a plurality of apertures (10') are provided in order to allow drips of water etc. to reach the drip tray (10). The support (14') is provided remote from the face (2) of the cabinet with a locking surface (15) which extends above the adjacent last roller for purposes which will be described herein below.

On each side of the interior of the cabinet (1) is located a pair of lower lateral locators (13) adapted to drive the jug (30) into its correct lateral position. Similarly, toward the upper portion of the jug cavity upper lateral locators (12) are provided for a similar purpose.

Immediately situate upwardly of the support (14') is a generally vertically arranged female portion of a socket (16) located by an inner cabinet rear wall (4') extending parallel to but spaced inwardly from the rear face (4) of the cabinet. The rear wall (4') also carries a socket hood (17) disposed over the socket (16) in a generally arcuate configuration and adapted to deflect any water from the socket connection.

As can be best seen in the broken lines in Figure 3, disposed generally vertically in the side face of the inner cabinet between the lateral locators (12) and (13) are three proximity sensors (18). These are adapted to sense presence or absence of water within the body of the jug (30) which is formed of a plastics material which may be transluscent or opaque as required. Each of the signals from the sensors (18) can be utilised to enable or disenable the water supply.

The upper face of the inner cabinet (23) is provided with a water flow inlet (8) adjacent a steam outlet (9). Both the inlet (8) and the outlet (9) are positioned above a spout (31) of the jug (30). The upper face (23) is provided toward the face (2) of the cabinet with an upper microswitch (21) adapted to cause a solenoid inlet valve (7) connected to a water inlet (6) to close if the microswitch is moved upwardly. The upper face of the inner cabinet (23) is provided with a plurality of apertures which connect the inner cabinet with a steam cavity (19'). Steam cavity (19') allows steam generated during the boiling process, and not being transferred by the steam outlet (9) to the exterior, where applicable, to exit to the exterior via a grill (19).

The grill (19) is superposed upon latch means (20) which ensure that the jug (30) is correctly located within the cabinet. The latch means (20) may be arranged to disenable all electronic controls when not latched whereby no operation of the kettle can take place if it is only partially positioned within the cabinet.

With particular reference to Figure 2 the jug (30), formed of a plastics material, has a generally rectangular cross-section in the vertical plane and a generally trapezoidal cross-section in transverse cross-section. The jug (30) is provided, on the lefthand side of the drawing, with a handle (34), and remote therefrom and in the upper portion thereof with a spout (31). Spout (31) is adapted for positioning below the inlet (8) and the steam outlet (9). The jug (30) is formed with a removable lid (32) in its upper portion. The removable lid (32) is adapted to fit snugly within the top of the body of the jug (30), and is provided with a float (33), or equivalent electronic means, which is adapted to move upwardly should the level of water cause it to do so. The float (33) thus can impinge upon the micro-switch (21) and switch off the water inlet solenoid valve (7) if overfilling should have occurred. The handle (34) is provided with a safety catch (35) which must be depressed in order to locate the latch (20) within the latch recess (36).

The lower portion of the jug (30) is provided with an integral lower locator plate (38) adapted for operative connection with the rollers (14). An element (39) supported by a male connector piece (40) is positioned within the lower portion of the jug (30). Immediately above the male connector (40) to the exterior of the jug is a water diverter (41) formed in a generally arcuate shape.

With particular reference to Figure 3 control buttons (22) are provided. These buttons (22) are of the press-on variety with an optional 'activated' light therein. When pressed the level sensors and the heating element are activated; the electrical circuits being arranged to switch off independently as required.

In use the jug may, of course, be filled manually from a domestic tap through the spout (31). The level of the water can be readily ascertained within the jug (30) since it is provided with a gauge (not shown). Alternatively, the automatic filling device in accordance with the present invention may be utilised. In either event the jug is slid spout foremost into the cabinet (1) until the lower locator plate (38) rides upon the rollers (14). As this happens lateral locators (12) and (13) located on each side of the jug direct the jug towards its correct orientation moving the entire body of the jug laterally as required. At an appropriate moment the forward end of the lower locator plate (38) contacts the locking surface (15) and causes the front end of the jug (30) to ride relatively upwardly thereby effecting the following desirable result: (i) allowing the male connector (40) to mate with the female socket (16) in order to provide a suitable electrical contact; (ii) causing the diverter (41) to lock under the hood (17) so preventing water slipping through the gap between the hood and the body of the jug (30); and (iii) causing the spout (31) to approach the steam outlet (9) and the water flow inlet (8).

At this point the latch (20) engages in the recess (36) at which point the jug is correctly positioned within the cabinet.

In the case where the jug (30) is substantially empty an operator may press the button which commences water flow. This will continue until the operator removes his finger from the button. As the operator continues to press the button he watches the height of water rise in the jug which may be indicated by a float in a gauge situated beside the handle at the rear of the jug.

When the required level is reached, the operator removes his finger from the button and presses the 'water boil' button once. At this point a red light comes on to indicate that the water is being boiled. As soon as boiling is reached a boiling sensor which may be a bi-metallic strip, or suitable electronic device (not shown), operates and causes the element to automatically switch off in standard fashion. A dry-boil cut-out is also provided in accordance with standard procedures in the art.

The operator may then release the manual catch on the jug and withdraw it. If the operator were to inadvertently keep his finger on the water fill button beyond the maximum the water level in the jug (30) would rise and contact the float (33). The float (33) would then cause the microswitch (21) to switch off the solenoid valve (7).

Steam generated by the boiling of the water in the jug (30) issues from the spout (31) mainly via the steam outlet (9). This may be led to the exterior. Alternatively it may open into the cavity (19') and escape to the exterior via the grill (19). Water condensing out in the cavity (19') can run back into the jug if desired by a suitable aperture adjacent the steam outlet (9). For this operation only two control buttons (22) and a red light are required. If thought desirable the float arrangement (33) can be dispensed with and replaced by a suitable proximity sensor (18) which operates if the water level rises to its level. Were any water to escape from the jug (30) and run down the exterior of the body thereof it would contact the hood (17) and the diverter (41) and be deflected from contact with the socket (16), (40). Such drips of water would then pass through the apertures (10') into the drip tray (10) and be evaporated to the exterior via the outlet (11).

In a second mode of operation all five control buttons (22) are utilised. In this mode of operation an operator presses one of three buttons, selecting an amount of water to be boiled i.e. one cup, half full, full etc. Each of these buttons switches on the element thus heating the water and causing the red light to come on. If desired a short audible signal may be arranged to indicate that the water has boiled in addition to switching the red light off. Again the operator presses the manual jug-release and releases the jug (30). The green light may then be arranged to flash in order to show that the jug (30) is not correctly positioned within the cabinet (1).

In contra-distinction to the previous method a selection of the half-full button, for example, causes intermediate proximity sensor (18) to be activated. This causes the solenoid (7) to switch off when the water level in the jug reaches a pre-given level. It will be appreciated that by means of this arrangement small amounts of water can be readily added to an existing amount of water within the jug and, indeed further, it is possible for the jug to be made of an opaque material if required for aesethic reasons.

It will be appreciated, therefore, that the kettles in accordance with the present invention may be filled although connected to the electrical supply with complete safety since it is arranged that while filling to a level above the element takes place the heating system via the element (39) cannot be enabled. Further, the kettle of the present invention does not take up working space on a working surface in a kitchen and cannot be inadvertently knocked over.

It will be further appreciated that the problem of steam condensation within a kitchen can be alleviated by use of the present invention and that with the kettle engaged in the cabinet the single act of pressing a button (22) will both fill and boil the kettle.

Accordingly, the present invention relates to the cabinet and kettle assembly, and to the individual members thereof adapted to co-operate with each other. It should be noted that the reference numerals in the claims are non-limiting.

**Claims**

1. Apparatus comprising an electric kettle (30) and a holder (1) in which the kettle is mounted for heating of its contents and from which the kettle is removable, wherein the kettle comprises a body having a heating element electrical connector (40) and the holder is also formed with an electrical connector (16), such that the connectors are inter-engageable in order to introduce electric current to the kettle, and wherein electric current can only be introduced when the kettle is correctly engaged in the holder, characterised in that the holder (1) comprises a boxlike cabinet intended for recessed mounting within a wall or a kitchen unit, the cabinet providing an open fronted cavity in which the whole kettle body is to be slidingly received, and in that the cabinet and kettle include means (14, 15, 38) for guidingly supporting the base of the kettle during sliding insertion of the kettle into the cavity, including means for directing the base of the kettle upwardly so as to inter-engage the connectors of the kettle and the cabinet, whereby upon full insertion of the kettle into the cavity the cabinet and the kettle are correctly inter-engaged.

2. Apparatus according to claim 1, wherein the means for guidingly supporting the base of the kettle include a plurality of rollers (14) in the bottom of the cabinet and the means for directing the base of the kettle upwardly include a plate (38) on the base of the kettle and a raised surface (15) at the inward end of the rollers (14), such that upon insertion of the kettle into the cavity, the kettle rides upwardly upon sliding impingement of the plate (38) upon the raised surface (15).

3. Apparatus according to claim 1 or 2, including hood means (17) to provide cover for the connectors when inter-engaged, and abutment means (41) arranged so that, upon interengagement of the connectors, the abutment means move into a locking position with the hood means and the latter protect the connectors.

4. Apparatus according to claim 1, 2 or 3, including lateral locators (12, 13) inside the holder for laterally locating the kettle correctly.

5. Apparatus according to any preceding claim, including means (10, 10', 11) for collecting and/or transferring to the exterior water occurring within the cabinet (1).

6. Apparatus according to any preceding claim, wherein the cabinet is provided with means (9, 19) for dissipating steam.

7. Apparatus according to any preceding claim wherein the connectors (16, 40) are inter-engageable only when the kettle body is latched into the cabinet (1).

8. Apparatus according to any preceding claim, wherein the connector (40) of the kettle body is positioned toward the base of the kettle and a bore is formed in the body of the kettle to provide means for guiding the kettle into the cabinet.

9. Apparatus according to any preceding claim, wherein the kettle body or a kettle lid (32) includes a float (33) for association with a microswitch (21) provided in the cabinet and arranged to close a water inlet valve (7) to prevent overfilling of the kettle.

10. Apparatus according to claim 2 or any of claims 3 to 9 as dependent upon claim 2, wherein the connectors (16, 40), when inter-engaged, are protected from water spillage by a socket hood (17) and a diverter (41), which moves into engagement with the under-surface of the socket hood (17) upon impingement of the plate (38) of the kettle upon the raised surface (15).

**Patentansprüche**

1. Vorrichtung, die aus einem elektrischen Kocher (30) und einer Halterung (1) besteht, in welcher der Kocher zum Erhitzen seines Inhalts angebracht und von dem er auch abnehmbar ist, wobei der Kocher einen ein Heizelement und damit verbundenes elektrisches Verbindungsglied (40) aufweisenden Körper bildet und der Halter ebenfalls mit einem elektrischen Verbindungsglied (16) versehen ist, so daß die Verbindungsglieder in Eingriff zu bringen sind um dem Kocher Strom zuzuführen, und wobei der elektrische Strom nur zugeführt werden kann, wenn der Kocher ordnungsgemäß im Halter sitzt, dadurch gekennzeichnet, daß der Halter (1) aus einem in eine Wand oder eine Kücheneinheit zurückgesetzt einbaubaren boxförmigen Einbaukasten besteht, der einen nach vorn offenen Aufnahmeraum aufweist, in welchem der gesamte Kocherkörper gleitverschieblich aufnehmbar ist, und daß der Einbauschrank und der Kocher Mittel (14, 15, 38) zur führenden Unterstützung der Unterseite des Kochers während seines gleitenden Einsetzens in den Aufnahmeraum aufweisen, und wobei weiterhin Mittel zum Anheben der Kocher-Unterseite vorgesehen sind, um die elektrischen Verbindungen zwischen dem Kocher und dem Einbaukasten herzustellen, wodurch nach vollem Einsetzen des Kochers in den Aufnahmeraum der Einbaukasten und der Kocher ordnungsgemäß in Eingriff sind.

2. Vorrichtung nach Anspruch 1, wobei die Mittel zum führenden Unterstützen der Unterseite des Kochers aus einer Mehrzahl von im Boden des Einbaukastens vorhandenen Walzen (14) und die Mittel zum Anheben der Unterseite des Kochers aus einer auf der Unterseite des Kochers angeordneten Platte (38) und einer am inneren Ende der Walzen (14) am Kastenboden erhöht angebrachten Oberfläche (15) bestehen, so daß beim Einsetzen des Kochers in den Einbaukasten der Kocher durch Aufgleiten seiner Platte (38) auf die erhöhte Oberfläche (15) angehoben wird.

3. Vorrichtung nach Anspruch 1 oder 2, wobei Abdeckmittel (17) zum Schutz der elektrischen Verbindungsmittel in ihrer Eingriffstellung vorgesehen sind, und weiterhin vorspringende Anschlagmittel (41) so angeordnet sind, daß bei der in Eingriffstellung der elektrischen Verbindungsglieder die Anschlagmittel in eine Schließlage zu den Abdeckmitteln gelangen und letztere die elektrischen Verbindungsglieder schützen.

4. Vorrichtung nach Anspruch 1, 2 oder 3, bei der innerhalb des Einbaukastens seitliche Führungselemente (12, 13) für die ordnungsgemäße seitliche Führung des Kochers vorhanden sind.

5. Vorrichtung nach einem vorhergehenden Anspruch, bei der Mittel (10, 10', 11) zum Sammeln und Weiterleiten von im Einbaukasten (1) anfallendem überschüssigem Wasser vorhanden sind.

6. Vorrichtung nach einem vorhergehenden Anspruch, bei der der Einbaukasten mit Mitteln (9, 19) zum Dampfauslaß versehen ist.

7. Vorrichtung nach einem vorhergehenden Anspruch, bei welcher die elektrischen Verbindungsglieder (16, 40) nur dann in Wirkungsverbindung miteinander zu bringen sind, wenn der Kocherkörper im Einbaukasten (1) eingeklinkt ist.

8. Vorrichtung nach einem vorhergehenden Anspruch, wobei der elektrische Verbindungsstecker (40) des Kocherkörpers nahe seinem Boden angeordnet und eine Bohrung im Kocherkörper vorhanden ist, um den Kocher bei dessen Einsetzen in den Einbaukasten zu führen.

9. Vorrichtung nach einem vorhergehenden Anspruch, wobei der Kocherkörper oder ein Kocherdeckel (32) einen Schwimmer (33) aufweisen, der mit einem im Einbaukasten vorhandenen Mikroschalter (21) zusammenarbeitet, der so geschaltet ist, daß er ein Wassereinlaßventil (7) zu schließen vermag, um ein Überfüllen des Kochers zu verhindern.

10. Vorrichtung nach Anspruch 2 oder einem der Ansprüche 3 bis 9 in deren Abhängigkeit vom Anspruch 2, wobei die elektrischen Verbindungsglieder (16, 40) in ihrer Eingriffstellung gegen Wasserspritzer durch eine Abdeckbüchse (17) und einen Ableiter (41) zu schützen sind, der an der Unterseite der Abdeckbüchse (17) anschlägt, sobald die Unterseite (38) des Kochers auf die vorspringende Oberfläche (15) gelangt.

**Revendications**

1. Appareil constitué par une bouilloire électrique (30) et un support (1) dans lequel est montée la bouilloire afin de chauffer son contenu, et dont la bouilloire peut être retirée, appareil dans lequel ladite bouilloire comprend un corps comportant un connecteur électrique (40) pour un élément chauffant et le support est également formé avec un connecteur électrique (16), de telle sorte que les connecteurs sont aptes à venir en prise mutuelle afin de conduire un courant électrique à la bouilloire, et dans lequel le courant électrique ne peut être conduit à la bouilloire que lorsque celle-ci est correctement engagée dans le support, caractérisé en ce que le support (1) est constitué par un coffret en forme de boîte destiné à être monté encastré dans un mur ou dans un élément de cuisine, ledit coffret réalisant une cavité ayant une ouverture avant dans laquelle la totalité du corps de la bouilloire est reçue de façon coulissante, et en ce que le coffret et la bouilloire comprennent des moyens (14, 15, 38) pour soutenir et guider le fond de la bouilloire lors de l'introduction de celle-ci par coulissement dans ladite cavité, comprenant des moyens pour diriger le fond de la bouilloire vers le haut afin d'engager les connecteurs de la bouilloire et du coffret en prise mutuelle, grâce à quoi lorsque la bouilloire a été complètement introduite dans la cavité, le coffret et la bouilloire sont correctement engagés en prise mutuelle.

2. Appareil suivant la revendication 1, dans lequel les moyens pour soutenir et guider le fond de la bouilloire comprennent plusieurs galets (14) dans la partie inférieure du coffret et les moyens pour diriger le fond de la bouilloire vers le haut comprennent une plaque (38) sur le fond de la bouilloire et une surface surélevée (15) à l'extrémité interne des galets (14) de sorte qu'à la suite de l'insertion de la bouilloire dans la cavité, la bouilloire passe en montant lorsque la plaque (38) heurte la surface surélevée (15) en glissant sur celle-ci.

3. Appareil suivant l'une quelconque des revendications 1 et 2, comprenant un capot (17) formant un couvercle pour les connecteurs lorsqu'ils sont en prise mutuelle, et des butées (41) agencées pour venir dans une position de verrouillage avec le capot à la suite de l'engagement des connecteurs en prise mutuelle, ledit capot protégeant les connecteurs.

4. Appareil suivant l'une quelconque des revendications 1, 2, 3 comprenant des centreurs latéraux (12, 13) à l'intérieur du support pour centrer latéralement la bouilloire correctement.

5. Appareil suivant l'une quelconque des revendications précédentes, comprenant des moyens (10, 10', 11) pour recueillir et/ou transférer à l'extérieur de l'eau apparaissant à l'intérieur du coffret.

6. Appareil suivant l'une quelconque des revendications précédentes, dans lequel le coffret comporte des moyens (9, 19) pour dissiper de la vapeur.

7. Appareil suivant l'une quelconque des revendications précédentes, dans lequel les connecteurs (16, 40) ne peuvent venir en prise mutuelle que lorsque le corps de la bouilloire est verrouillé dans le coffret (1).

8. Appareil suivant l'une quelconque des revendications précédentes, dans lequel le connecteur (40) du corps de la bouilloire est disposé vers le fond de celle-ci et un trou est formé dans le corps de la bouilloire pour former des moyens pour guider celle-ci dans le coffret.

9. Appareil suivant l'une quelconque des revendications précédentes, dans lequel le corps de la bouilloire, ou un couvercle (32) de celle-ci, comprend un flotteur (33) destiné à coopérer avec un micro-interrupteur (21) prévu dans le coffret et agencé pour fermer un robinet (7) d'entrée d'eau afin d'empêcher un remplissage surabondant de la bouilloire.

10. Appareil suivant la revendication 2, ou l'une quelconque des revendications 3 à 9 lorsqu'elles sont dépendantes de la revendication 2, dans lequel les connecteurs (16, 40), lorsqu'ils sont en prise mutuelle, sont protégés des suintements d'eau par un capot (17) formant logement et par un déflecteur (41), qui se déplace en contact avec la surface inférieure du capot (17) lorsque la plaque (38) de la bouilloire heurte la surface surélevée (15).

# FIG.1

# FIG.2

36

32

31

35

37

33

30

41

34

39

40

38

# FIG.3